# FASCICULE DE BREVET EUROPEEN

(11) **EP 1 871 058 B1**
(45) Date de publication et mention de la délivrance du brevet: **30.12.2009**
(21) Numéro de dépôt: 07108875.1
(22) Date de dépôt: 24.05.2007
(51) Int. Cl.: H04L 12/56

(54) **Système et procédé de gestion de messages transmis dans un réseau d'interconnexions.**
System und Verfahren zur Behandlung in einem Verbindungsnetzwerk transportierter Nachrichten
System and method for the management of messages transported in an interconnection network

(30) Priorité: 23.06.2006 FR 0605646
(43) Date de publication de la demande: 26.12.2007
(73) Titulaire: ARTERIS, 78280 Guyancourt (FR)
(72) Inventeur: Boucard, Philippe, 78150, LE CHESNAY (FR); Vacquerie, Vincent, 78980, LOGNES (FR)
(74) Mandataire: de Kernier, Gabriel

(56) Documents cités:
- EP-A- 1 507 374
- EP-A2- 1 179 925

## Description

La présente invention porte sur un système et un procédé de gestion de messages transmis dans un réseau d'interconnexions de blocs IP sur puce notamment de silicium.

Plus particulièrement, l'invention s'applique à un réseau d'interconnexions comprenant des agents reliés par des liens point-à-point aptes à transmettre des messages comprenant une information de priorité. On connaît à cet effet le document FR 2 858 895.

Les systèmes sur puce ("on-chip systems", en langue anglaise), comprennent des composants, ou blocs IP ("Intellectual Property block" en langue anglaise), communiquant par un réseau d'interconnexions ("network on-chip", en langue anglaise).

Ces composants effectuent des traitements de données et génèrent des trafics de données qui ont des caractéristiques et des contraintes généralement différentes.

Par exemple, une application peut nécessiter une bande passante supérieure à une bande passante minimale, et une autre application peut nécessiter une latence inférieure à une latence maximale. Dès lors, un réseau d'interconnexions sur puce doit offrir des garanties de service pour tous les composants présents dans le système sur puce.

D'une manière générale, le contrôle de la qualité de service d'un réseau doit permettre de gérer au mieux les ressources existantes en fonction des contraintes du réseau.

Par exemple, un lien optimisé pour un trafic de données prioritaires peut accepter de transporter des données moins prioritaires lorsqu'une partie de la bande passante de ce lien est libre.

Pour un utilisateur, la qualité de service, dans le cadre du fonctionnement de composants, doit permettre de fournir un comportement déterministe ou prédictible. Par exemple, un lecteur de données enregistrées au format DVD doit être capable de décoder la vidéo et le son d'un film de manière à les restituer de façon fluide.

Un but de l'invention est de gérer des messages transmis dans un réseau d'interconnexions sur puce, de manière à garantir une bonne qualité de service d'une application.

Un autre but de l'invention est de faciliter l'arrivée d'un message de requête à destination d'un agent destinataire lorsque ledit message se trouve bloqué dans le réseau du fait d'un niveau de priorité faible et/ou d'un encombrement du réseau.

Ainsi, selon un aspect de l'invention, il est proposé un système de gestion de messages transmis dans un réseau d'interconnexions de blocs sur puce. Le système comprend des agents reliés par des liens point-à-point aptes à transmettre, par routage statique, des messages comprenant une information de priorité quantifiée sur N niveaux, et comprend au moins un agent initiateur de messages de requête à destination d'au moins un agent destinataire. Un message de requête comprend un en-tête et éventuellement des données de contenu. Le système comprend des moyens de détermination d'une priorité courante, et des moyens de génération d'un message prioritaire adaptés pour générer un message prioritaire lorsque ladite priorité courante est supérieure à la priorité du dernier message de requête précédemment transmis par ledit agent initiateur audit agent destinataire sans message de réponse reçu en retour. En outre, le système comprend des moyens de propagation pour propager, dans le réseau d'interconnexions, à partir d'un message prioritaire émis par lesdits moyens de génération, le niveau de priorité dudit message prioritaire, à destination dudit ou desdits messages de requête, de sorte que lesdits messages de requête présents sur le chemin de routage dudit agent destinataire sont traités en messages de requête ayant un niveau de priorité égal au niveau de priorité dudit message prioritaire.

Ainsi, lorsqu'un message de requête est bloqué dans le réseau, le trafic de messages dans le réseau se dégrade, et la priorité courante du système est augmentée. Lorsqu'il n'y a plus de transaction en provenance de l'agent initiateur, on détermine, par agent destinataire, s'il reste au moins un message de requête sans réponse et de priorité inférieure à la priorité courante présent dans le réseau. S'il en reste au moins un, on envoie un message prioritaire à l'agent destinataire correspondant pour simuler, pour le message bloqué, le niveau de priorité du message prioritaire, en utilisant une propagation du niveau de priorité, et accélérer son traitement.

Le système comprend un routage statique pour lequel tous les messages émis par un premier agent du réseau à destination d'un deuxième agent du réseau passent par les mêmes liens formant le chemin de routage entre le premier agent et le deuxième agent.

Ainsi, tous les messages de l'agent initiateur à destination de l'agent destinataire empruntent un chemin de routage identique, et tous les messages de requête précédemment transmis et encore présents sur le chemin de routage de l'agent initiateur à l'agent destinataire bénéficient du niveau de priorité du message prioritaire.

Un message prioritaire est envoyé lorsque l'agent initiateur ne peut pas envoyer un message suivant avec un niveau de priorité plus élevé, car il lui est nécessaire de recevoir la réponse à un message de requête précédent, avant d'envoyer un message suivant. Cela est le cas, par exemple, pour une unité centrale effectuant une opération de calcul.

Le système a un coût réduit comparé à un surdimensionnement du réseau d'interconnexions.

En outre, le système permet d'éviter les problèmes de faible bande passante obtenue par commutation de circuits, dans laquelle un chemin physique ou logique est établi entre deux agents et est bloqué pour toute la durée de la communication. La commutation d'un lien physique entre un agent initiateur et un agent destinataire durant tout le temps de la communication entre les deux agents rend la bande passante moyenne dédiée au lien commuté très faible, car, généralement, l'agent destinataire n'est pas immédiatement disponible. Le système garantit une bande passante minimale sans dégradation pour les autres trafics en cas de situations critiques.

De surcroît, le système permet d'éviter une forte diminution de la bande passante présente lors d'un multiplexage temporel d'un lien permettant de garantir l'utilisation, à une fréquence régulière, du lien par plusieurs agents initiateurs. En effet, si un lien à été partiellement réservé à un agent initiateur et que celui-ci n'émet pas de données durant un certain temps, la bande passante du lien diminue fortement.

Par exemple, le message prioritaire ne comprend qu'un en-tête et pas de données de contenu, ce qui n'entraîne pas de diminution de la bande passante. La taille du message est alors très faible, et provoque un encombrement supplémentaire négligeable du réseau.

Dans un mode de réalisation, le système comprend, en outre :
- des moyens d'affectation aptes à substituer par la priorité courante ou à laisser inchangé le niveau de priorité initial d'un message de requête émis par ledit agent initiateur à destination dudit agent destinataire en fonction de la valeur d'un paramètre représentatif de l'état du réseau ; et
- des moyens de gestion d'informations relatives aux messages de requête transmis par lesdits moyens d'affectation audit agent destinataire.

Juste après son émission, un message de requête peut avoir son niveau de priorité modifié pour tenir compte de l'état du réseau.

Dans un mode de réalisation lesdits moyens de détermination de la priorité courante sont adaptés pour déterminer le niveau de priorité courante en fonction de la position de la valeur d'un paramètre représentatif de l'état du réseau, par rapport à N-1 valeurs de seuils définissant N intervalles de valeurs dudit paramètre, respectivement associés auxdits N niveaux d'information de priorité.

Il est alors possible d'adapter le niveau de priorité d'un message de requête émis en fonction de l'état du réseau, avec N niveaux de priorité. Aussi, il est possible, en cas de situation critique de récupérer de la bande passante.

Selon un mode de réalisation, lesdits moyens de gestion comprennent des moyens de mémorisation et des moyens de mise à jour de paramètres représentatifs des messages de requête transmis par lesdits moyens d'affectation à un agent destinataire. Lesdits paramètres comprennent un indicateur représentatif dudit agent initiateur, un indicateur représentatif dudit agent destinataire, le niveau de priorité affecté par lesdits moyens d'affectation au dernier message de requête envoyé par ledit agent initiateur ou par lesdits moyens de génération audit agent destinataire, et un compteur du nombre de messages de requête transmis par lesdits moyens d'affectation audit agent destinataire et n'ayant pas fait l'objet d'un message de réponse reçu par ledit agent initiateur.

Selon un mode de réalisation, lesdits moyens de propagation comprennent des moyens de transmission, respectivement dédiés à une sortie d'un agent, adaptés pour déterminer une information de priorité d'entrée, respectivement dédiée à une entrée dudit agent, de valeur égale au niveau maximum entre une information de priorité d'un message présent à ladite entrée et d'une information de priorité de lien du lien de ladite entrée, et adaptés pour propager, sur le lien de la sortie correspondante, une information de priorité de valeur égale au maximum des valeurs desdites informations de priorités d'entrées relatives aux entrées comprenant un message pour lequel l'entrée à requis ladite sortie correspondante.

Selon un mode de réalisation, lesdits moyens de propagation sont adaptés pour propager, en sortie d'une file d'attente, une information de priorité de lien égale au niveau maximum des informations de priorité des messages présents dans ladite file d'attente et d'une information de priorité de lien du lien d'entrée de ladite file d'attente.

Selon un mode de réalisation, ledit paramètre représentatif de l'état du réseau comprend la quantité de données mémorisées dans une file d'attente dudit agent initiateur.

Il s'agit, par exemple, d'une file d'attente de données de réponse à des messages de requête. Si l'agent initiateur est une mémoire à accès direct de type DMA. Il s'agit de d'éviter des ruptures de trafic lors d'une reconstitution d'une réponse unique à partir de réponses provenant de plusieurs agents destinataires, par exemple lors de la reconstitution d'une trame vidéo. Lorsque la file d'attente est presque vide, la priorité courante est augmentée, et lorsque la file d'attente est presque pleine, la priorité courante est diminuée.

Selon un mode de réalisation, ledit paramètre représentatif de l'état du réseau comprend le nombre de périodes du signal de cadencement d'horloge d'émission de messages dudit agent initiateur séparant l'envoi d'un message de requête dudit agent initiateur et la réception du message de réponse associé.

Plus la latence mesurée augmente, plus la priorité courante est augmentée, afin de la maintenir à un niveau suffisamment faible.

Selon un mode de réalisation, ledit paramètre représentatif de l'état du réseau comprend un pseudo-débit de données, calculé par ajout, pour un message de requête émis par l'agent initiateur à destination dudit agent destinataire, de la quantité de données associées audit message de requête, et par soustraction d'une quantité prédéterminée de données par période du signal de cadencement d'horloge d'émission de messages dudit agent initiateur.

Les données associées à un message de requête peuvent être les données de contenu de la requête, par exemple dans une requête d'écriture de données, ou le contenu du message de réponse associé à la requête par exemple dans une requête de lecture de données.

Le dispositif permet de réserver une partie de la bande passante pour l'agent initiateur, tant que ce dernier ne risque pas de saturer le réseau, et en cas de débordement, l'agent initiateur peut toujours récupérer de la bande passante, mais cette fois sans garantie.

Selon un mode de réalisation, le système comprend une valeur de seuil définissant deux niveaux d'information de priorité, correspondant à des messages prioritaires et non prioritaires.

Il est possible de réaliser un tel réseau avec uniquement deux niveaux de priorité.

Selon un mode de réalisation, ledit agent destinataire est adapté, en réponse à un message prioritaire desdits moyens de génération associés audit agent initiateur, pour transmettre un message prioritaire de même niveau de priorité à destination dudit agent initiateur.

Il est ainsi possible de propager ce niveau de priorité sur le chemin de routage des messages de réponse en retour des messages de requête, et ainsi, avec la propagation du niveau de priorité du message prioritaire, faire également bénéficier du niveau de priorité du message prioritaire les messages de réponse précédemment retournés et toujours sur le chemin de routage des messages de réponse.

Selon un mode de réalisation, les moyens de mémorisation comprennent une mémoire CAM.

Une mémoire CAM est une mémoire adressable ou mémoire associative, dans laquelle la position d'une donnée est déterminée par son contenu et non par une adresse.

Dans un mode de réalisation, il est proposé un système de gestion de messages transmis dans un réseau d'interconnexions de blocs sur puce. Le système comprend des agents reliés par des liens point-à-point aptes à transmettre des messages comprenant une information de priorité quantifiée sur N niveaux, et comprend un agent initiateur de messages de requête à destination d'au moins un agent destinataire. Un message de requête comprend un en-tête et des données de contenu. Le système comprend des moyens de génération d'un message prioritaire, à destination d'un agent destinataire auquel au moins un message de requête a été précédemment transmis. Un message prioritaire généré par lesdits moyens de génération comprend une information de priorité de niveau supérieur au niveau de priorité dudit message de requête précédemment transmis audit agent destinataire. Le message prioritaire est généré pour accélérer l'arrivée du message de requête à l'agent destinataire, le message prioritaire et le message de requête passant par les mêmes liens. Le message de requête bénéficie du niveau de priorité dudit message prioritaire.

Selon un autre aspect de l'invention, il est proposé un procédé de gestion de messages transmis dans un réseau d'interconnexions de blocs sur puce. Ledit réseau comprend des agents reliés par des liens point-à-point aptes à transmettre, par routage statique, des messages comprenant une information de priorité quantifiée sur N niveaux, et comprend au moins un agent initiateur de messages de requête à destination d'au moins un agent destinataire. Un message de requête comprend un en-tête et éventuellement des données de contenu. On détermine une priorité courante, et on génère un message prioritaire lorsque ladite priorité courante est supérieure à la priorité du dernier message de requête précédemment transmis par ledit agent initiateur audit agent destinataire sans message de réponse reçu en retour. En outre, on propage dans le réseau d'interconnexions, à partir d'un message prioritaire généré, le niveau de priorité dudit message prioritaire, à destination du ou desdits messages de requête, de sorte que lesdits messages de requête présents sur le chemin de routage dudit agent destinataire sont traités en messages de requête ayant un niveau de priorité égal au niveau de priorité dudit message prioritaire.

Selon un mode de mise en oeuvre, on substitue par la priorité courante ou on laisse inchangé le niveau de priorité initial d'un message de requête émis par ledit agent initiateur à destination dudit agent destinataire en fonction de la valeur d'un paramètre représentatif de l'état du réseau, et on gère des informations relatives aux messages de requête transmis, après affectation, audit agent destinataire.

D'autres buts, caractéristiques et avantages de l'invention apparaîtront à la lecture de la description suivante, de quelques exemples nullement limitatifs, et faite en référence aux dessins annexés, sur lesquels :
- la figure 1 est une vue schématique d'un mode de réalisation d'un système de gestion de messages transmis dans un réseau d'interconnexions de blocs IP sur puce de silicium, selon un aspect de l'invention ; et
- les figures 2 et 3 illustrent la propagation dans le réseau d'interconnexions du niveau de l'information de priorité d'un message prioritaire, selon un aspect de l'invention.

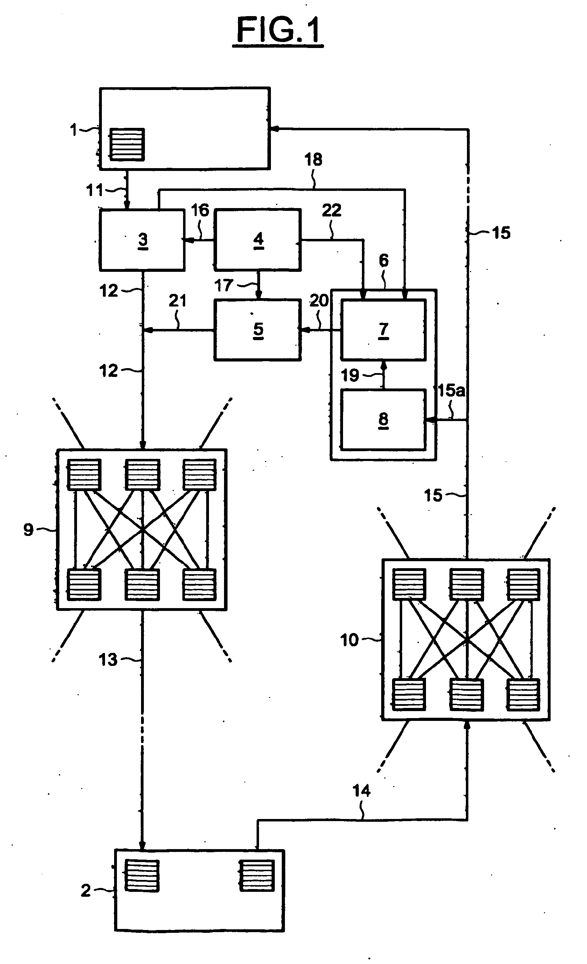

Tel qu'illustré sur la figure 1, un système de gestion de messages transmis dans un réseau d'interconnexions de blocs sur puce, comprend un agent initiateur 1 et un agent destinataire 2. Un réseau d'interconnexions est décrit dans le document FR 2 858 895 auquel le lecteur est invité à se référer. Le document FR 2 858 895 donne un exemple de propagation de priorité.

Le réseau d'interconnexions comprend des agents 1, 2, 9, 10 reliés par des liens point-à-point aptes à transmettre, par routage statique, des messages comprenant une information de priorité quantifiée sur N niveaux.

Les liens du réseau d'interconnexions sont des liens unidirectionnels.

Le nombre N de niveaux de priorité n'est pas limité, toutefois, il est de manière préférentielle égal à 2 ou 3.

Seul un agent destinataire 2 est représenté sur la figure 1, toutefois, l'invention s'applique à un mode de réalisation dans lequel plusieurs agents initiateurs échangent des messages avec une pluralité d'agents destinataires. Dans ce cas les ressources sont partagées.

Le système comprend, en outre, un module d'affectation 3, un module de détermination 4 de la valeur d'un paramètre représentatif de l'état du réseau d'interconnexions, et un module de génération 5 de messages prioritaires. Le module d'affectation 3 est capable de modifier ou laisser identique le niveau de priorité d'un message de requête émis par l'agent initiateur 1.

En outre, le système comprend un module de gestion 6 d'informations relatives aux messages de requête transmis par le module d'affectation 3 à l'agent destinataire 2. Le module de gestion 6 permet de gérer ou, en d'autres termes de mémoriser et mettre à jour des informations concernant les messages de requêtes émis par l'agent initiateur 1 pour l'agent destinataire 2.

Le module de gestion 6 comprend un module de mémorisation 7 et un module de mise à jour 8 de paramètres représentatifs des messages de requête transmis par le module d'affectation 3 à l'agent destinataire 2. Le module de mémorisation 7 permet de stocker en mémoire des valeurs desdits paramètres.

Plusieurs agents de commutation peuvent être disposés sur le trajet de messages de requête entre l'agent initiateur 1 et l'agent destinataire 2, et plusieurs agents de commutation peuvent être disposés sur le trajet de messages de réponse entre l'agent destinataire 2 et l'agent initiateur 1.

Dans cet exemple, seuls un agent de commutation 9 et un agent de commutation 10 ont respectivement été représentés sur le chemin de routage des requêtes entre l'agent initiateur 1 et l'agent destinataire 2 et sur le chemin de routage des réponses entre l'agent destinataire 2 et l'agent initiateur 1.

L'agent initiateur 1 est connecté au module d'affectation 3 par un lien unidirectionnel 11. Le module d'affectation 3 est connecté à une entrée de l'agent de commutation 9 par un lien unidirectionnel 12.

Une sortie de l'agent de commutation 9 est connectée à l'agent destinataire 2 par un lien unidirectionnel 13.

L'agent destinataire 2 est connecté à une entrée de l'agent de commutation 10 par un lien unidirectionnel 14, et une sortie de l'agent de commutation 10 est connectée à l'agent initiateur 1 par un lien unidirectionnel 15.

En outre, le lien unidirectionnel 15 est connecté, par un embranchement 15a, au module de mise à jour 8 pour permettre au module de mise à jour 8 de recevoir en entrée les messages de réponses de l'agent destinataire 2, afin de pouvoir mettre à jour les valeurs des paramètres mémorisés par le module de mémorisation 7.

Le module de détermination 4 est connecté par un lien 16 au module d'affectation 3, et au module de génération 5 par un lien 17.

Le module d'affectation 3 est connecté au module de mémorisation 7 par un lien 18. Ainsi, lorsque le module d'affectation 3, transmet un message de requête émis par l'agent initiateur (1) à destination de l'agent destinataire 2, le module de mémorisation 7 peut mémoriser des valeurs de paramètres représentatif de ce message de requête avec éventuellement un niveau de priorité modifié par le module d'affectation 3.

En outre, le module de mise à jour 8 est connecté au module de mémorisation 7 par un lien 19, permettant au module de mise à jour 8 de mettre à jour les valeurs des paramètres mémorisés par le module de mémorisation 7.

Le module de mémorisation 7 est connecté au module de génération 5 par un lien 20 afin de permettre de constituer l'en-tête d'un message prioritaire à partir de données contenues dans les moyens de mémorisation 7, lorsque le module de gestion 6 décide de faire générer un message prioritaire par le module de génération 5. En outre, le module de génération 5 est connecté au lien 12 par un lien 21. Les modules de détermination 4 et de gestion 6 sont connectés par un lien 22 permettant de transmettre le niveau de priorité courante défini par le module de détermination 4 afin que le module de gestion 6 puisse le comparer avec le niveau de priorité mémorisé dans le module de mémorisation 7, pour déterminer s'il faut émettre un message prioritaire.

Le paramètre représentatif de l'état du réseau, déterminé par le module de détermination 4 peut, par exemple, être la quantité de données mémorisées dans une file d'attente de réponses de l'agent initiateur 1. Le paramètre représentatif de l'état du réseau, déterminé par le module de détermination 4 peut également être le nombre de périodes du signal de cadencement d'horloge d'émission de messages de l'agent initiateur 1 séparant l'envoi d'un message de requête dudit agent initiateur 1 et la réception du message de réponse associé. En outre, le paramètre représentatif de l'état du réseau, déterminé par le module de détermination 4 peut être un pseudo-débit de données, calculé par ajout, pour un message de requête émis par l'agent initiateur 1 à destination de l'agent destinataire 2 et transmis par le module d'affectation 3, de la quantité de données associées au message, et par soustraction d'une quantité prédéterminée de données par période du signal de cadencement d'horloge d'émission de messages de l'agent initiateur 1. Les données associées à un message de requête peuvent être les données de contenu de la requête, par exemple dans une requête d'écriture de données, ou le contenu du message de réponse associé à la requête par exemple dans une requête de lecture de données.

Bien entendu, le paramètre représentatif de l'état du réseau n'est pas limité à ces trois exemples.

Dans la suite de la description, le paramètre représentatif de l'état du réseau est ledit pseudo-débit, et le module de détermination 4 détermine la valeur du pseudo-débit.

La description porte sur le cas général à N niveaux de priorité, toutefois, un cas souvent utilisé est à deux niveaux de priorité : prioritaire et non prioritaire.

Lorsque l'agent initiateur 1 émet un message de requête à destination de l'agent destinataire 2, celui-ci est transmis par le lien 11.

En fonction de la valeur du pseudo-débit déterminée par le module de détermination 4 et transmis au module d'affectation 3 par le lien 16, le module d'affectation 3 modifie ou laisse inchangé le niveau de priorité compris dans l'en-tête du message émis par l'agent initiateur 1.

Le module d'affectation 3 comprend N-1 valeurs de seuil de pseudo-débit mémorisées, et déterminant N intervalles de valeurs de pseudo-débit respectivement associé à N niveaux de priorité.

Selon la valeur déterminée du pseudo-débit, le module d'affectation 3 affecte au message émis par l'agent initiateur 1 le niveau de priorité correspondant à l'un des N intervalles dans lequel se trouve la valeur de pseudo-débit déterminée par le module de détermination 4.

Aussi, le module d'affectation 3 transmet le message émis par l'agent initiateur 1 sur le lien 12 soit avec le même niveau d'information de priorité, soit avec un nouveau niveau de priorité.

Le module de mémorisation 7 permet de stocker la valeur de paramètres représentatifs des messages de requête transmis par le module d'affectation 3 à l'agent destinataire 2.

Ces paramètres comprennent, par exemple, un indicateur représentatif de l'agent initiateur 1, un indicateur représentatif de l'agent destinataire 2, le niveau de l'information de la priorité affecté par le module d'affectation 3 au dernier message de requête envoyé par l'agent initiateur 1 ou par le module de génération 5 à l'agent destinataire 2, et un compteur du nombre de messages de requête transmis par le module d'affectation 3 à l'agent destinataire 2 sans retour de message de réponse correspondant.

Le module de mise à jour 8 permet, par l'intermédiaire du lien 19, de mettre à jour la valeur des paramètres mémorisés dans le module de mémoire 7, en fonction des messages de réponse transmis par l'agent destinataire 2 à l'agent initiateur 1 par l'intermédiaire des liens 14 et 15, transmis également au module de mise à jour 8 par le lien 15a.

En fonction des valeurs des paramètres stockées dans le module de mémorisation 7, transmises au module de génération 5 par le lien 20, le module de génération 5 peut générer un message prioritaire à destination de l'agent destinataire 2 auquel au moins un message de requête a été précédemment transmis sans que l'agent initiateur 1 n'ait reçu de message de réponse associé en retour.

Le niveau de priorité de ce message prioritaire est alors propagé aux messages de requête précédemment transmis par l'agent initiateur 1 à l'agent destinataire 2 qui sont bloqués dans le réseau entre l'agent initiateur 1 et l'agent destinataire 2.

L'agent destinataire 2, est en outre capable, lorsqu'il reçoit un message prioritaire, de transmettre, en retour un message de réponse de même niveau de priorité, à destination de l'agent initiateur 1, de manière à propager le niveau de priorité du message prioritaire sur le chemin de routage des messages de retour à destination de l'agent initiateur 1.

Ainsi, le niveau de priorité de ce message prioritaire peut être propagé sur ce chemin de retour, qui peut contenir des messages de réponses bloqués en retour. En association avec le mécanisme de propagation de priorité, ces messages bénéficient alors du niveau de priorité du message prioritaire.

Un message prioritaire est émis par le module de génération 5 lorsque l'agent initiateur 1 n'émet plus de message de requête à destination de l'agent destinataire 2 et qu'il existe au moins un message de requête, de niveau de priorité inférieur au niveau de priorité courant, précédemment transmis sans message de réponse reçu en retour.

En effet, si l'agent initiateur 1 pouvait envoyer un nouveau message de requête avec une priorité supérieure, celui-ci propagerait cette priorité grâce aux mécanismes de propagation de priorité mis en oeuvre. En d'autres termes, si l'agent initiateur 1 peut envoyer un message, il l'envoie avec la priorité courante, ce qui rend inutile l'envoi d'un message prioritaire.

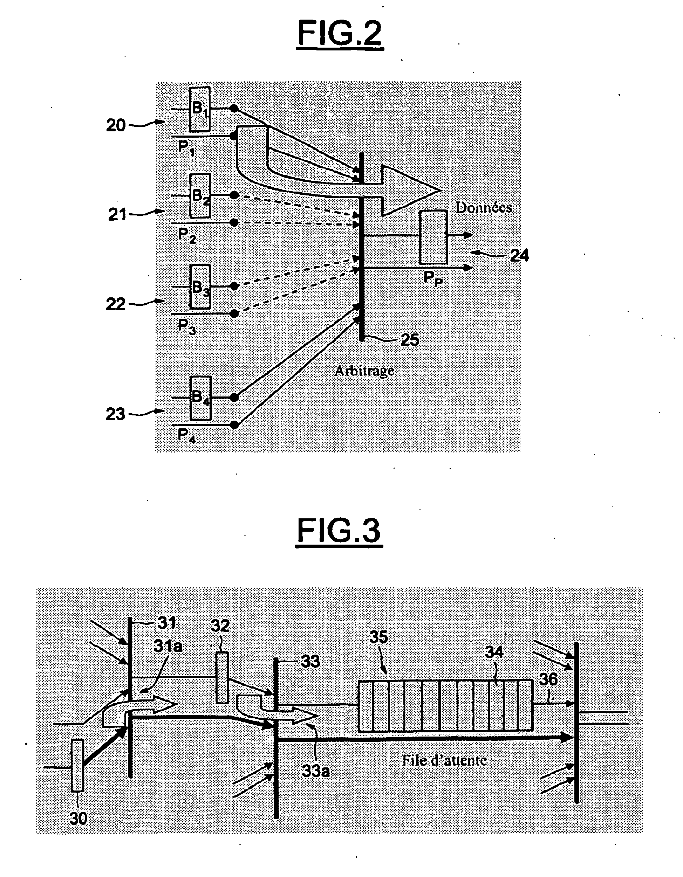

Le mécanisme de propagation du niveau d'information de priorité d'un message prioritaire ou de niveau de priorité plus élevé est illustré plus en détail sur les figures 2 et 3.

La figure 2 illustre un agent de commutation comprenant quatre entrées 20, 21, 22 et 23 et une sortie 24 permettant la transmission de messages à destination de l'agent destinataire 2.

Un arbitrage est fait pour chaque sortie, ici par un arbitre 25.

Quatre messages B₁, B₂, B₃ et B₄ sont respectivement en entrée de l'agent de commutation, sur les entrées 20, 21, 22 et 23.

P₁, P₂, P₃ et P₄ représentent les niveaux de priorité respectifs propagés sur les liens des entrées 20, 21, 22 et 23.

Sur cet exemple, seules les entrées 20 et 23 désirent se voir attribuer la sortie 24, les entrées 21 et 22 n'ayant, à cet instant, pas de message présent en entrée à destination de la sortie 24.

Aussi, la priorité propagée Pₚ en sortie de l'agent de commutation sera égale au maximum du niveau d'information de priorité du message B₁, du niveau d'information de priorité du message B₄, du niveau d'information de priorité P₁ associé au lien de l'entrée 20, et du niveau d'information de priorité P₄ associée au lien de l'entrée 23.

Le message prioritaire emprunte le même chemin que le message bloqué qu'on cherche à débloquer. Ce message prioritaire rend le message bloqué semblable à un message de même niveau de priorité et favorise ainsi son déblocage de sorte qu'il puisse arriver à l'élément destinataire. En d'autres termes, ce message prioritaire pousse les messages qui freinent sa progression, et finit par propager sa priorité sur le chemin menant à l'élément destinataire jusqu'au message bloqué et favorise ainsi son déblocage.

Comme la progression du message prioritaire est favorisée, et qu'il ne peut pas doubler le paquet de données bloqué, il va finir par pousser ce dernier si celui-ci est toujours bloqué, et ainsi, tout se passe comme si le paquet bloqué avait hérité du niveau de priorité du paquet prioritaire.

Une telle propagation de priorité est illustrée sur la figure 3.

Un message prioritaire 30 est sélectionné par un arbitre 31 dédié à une sortie 31 a d'un premier agent de commutation, tandis que le message 32 qui le précède et qui utilise le chemin à destination de l'élément destinataire est en cours de transfert à travers un deuxième agent de commutation en étant sélectionné par un arbitre 33 d'une sortie 33a du deuxième agent de commutation à destination de l'agent destinataire.

Un message 34 de requête à destination de l'agent destinataire est bloqué dans une file d'attente 35 dans laquelle entre le message 32.

Grâce à la propagation de priorité, le niveau d'information de priorité du message prioritaire est propagé à travers les deux premiers agents de commutation et va rendre prioritaire une entrée 36 d'un troisième agent de commutation, car tous les message présents dans la file d'attente 35, y compris le message 34 que l'on veut pousser, héritent de ce niveau de priorité.

Aussi, l'invention permet de simuler une augmentation du niveau de priorité d'un message de requête déjà transmis dans le réseau, dont on attend un message de réponse.

En d'autres termes, lorsqu'un agent initiateur a émis un message de requête à destination d'un agent destinataire, et que cette requête possède un faible niveau de priorité, la priorité étant fonction d'un paramètre représentatif de l'état du réseau, et que ce message de requête se trouve bloqué en un endroit du chemin de routage de l'agent initiateur à l'agent destinataire, car d'autres messages de niveau de priorité supérieure passent avant lui, l'invention permet de faire bénéficier ce message bloqué d'un niveau de priorité supérieur afin de l'acheminer à destination. Le message de réponse peut alors être envoyé plus rapidement vers l'agent initiateur.

## Revendications

1. Système de gestion de messages transmis dans un réseau d'interconnexions de blocs sur puce, ledit système comprenant des agents reliés par des liens point-à-point aptes à transmettre, par routage statique, des messages comprenant une information de priorité quantifiée sur N niveaux, et comprenant au moins un agent initiateur (1) de messages de requête à destination d'au moins un agent destinataire (2), un message de requête comprenant un en-tête et éventuellement des données de contenu, **caractérisé en ce qu'**il comprend des moyens de détermination (4) d'une priorité courante, des moyens de génération (5) d'un message prioritaire lorsque ladite priorité courante est supérieure à la priorité du dernier message de requête précédemment transmis par ledit agent initiateur audit agent destinataire sans message de réponse reçu en retour, et des moyens de propagation pour propager, dans le réseau d'interconnexions, à partir d'un message prioritaire émis par lesdits moyens de génération (5), le niveau de priorité dudit message prioritaire, à destination dudit ou desdits messages de requête, de sorte que lesdits messages de requête présents sur le chemin de routage dudit agent destinataire (2) sont traités en messages de requête ayant un niveau de priorité égal au niveau de priorité dudit message prioritaire.

2. Système selon la revendication 1, comprenant, en outre :
- des moyens d'affectation (3) aptes à substituer par la priorité courante ou à laisser inchangé le niveau de priorité initial d'un message de requête émis par ledit agent initiateur (1) à destination dudit agent destinataire (2) en fonction de la valeur d'un paramètre représentatif de l'état du réseau ; et
- des moyens de gestion (6) d'informations relatives aux messages de requête transmis par lesdits moyens d'affectation (3) audit agent destinataire (2).

3. Système selon la revendication 2, dans lequel lesdits moyens de détermination de la priorité courante sont adaptés pour déterminer le niveau de priorité courante en fonction de la position de la valeur d'un paramètre représentatif de l'état du réseau, par rapport à N-1 valeurs de seuils définissant N intervalles de valeurs dudit paramètre, respectivement associés auxdits N niveaux d'information de priorité.

4. Système selon la revendication 3, dans lequel lesdits moyens de gestion (6) comprennent des moyens de mémorisation (7) et des moyens de mise à jour (8) de paramètres représentatifs des messages de requête transmis par lesdits moyens d'affectation (3) à un agent destinataire, lesdits paramètres comprenant un indicateur représentatif dudit agent initiateur, un indicateur représentatif dudit agent destinataire, le niveau de priorité affecté par lesdits moyens d'affectation (3) au dernier message de requête envoyé par ledit agent initiateur ou par lesdits moyens de génération audit agent destinataire, et un compteur du nombre de messages de requête transmis par lesdits moyens d'affectation (3) audit agent destinataire (2) et n'ayant pas fait l'objet d'un message de réponse reçu par ledit agent initiateur.

5. Système selon la revendication 3 ou 4, dans lequel lesdits moyens de propagation comprennent des moyens de transmission, respectivement dédiés à une sortie d'un agent (9), adaptés pour déterminer une information de priorité d'entrée, respectivement dédiée à une entrée dudit agent, de valeur égale au niveau maximum entre une information de priorité d'un message présent à ladite entrée et d'une information de priorité de lien du lien de ladite entrée, et adaptés pour propager, sur le lien de la sortie correspondante, une information de priorité de valeur égale au maximum des valeurs desdites informations de priorités d'entrées relatives aux entrées comprenant un message pour lequel l'entrée à requis ladite sortie correspondante.

6. Système selon la revendication 5, dans lequel lesdits moyens de propagation sont adaptés pour propager, en sortie d'une file d'attente, une information de priorité de lien égale au niveau maximum des informations de priorité des messages présents dans ladite file d'attente et d'une information de priorité de lien du lien d'entrée de ladite file d'attente.

7. Système selon l'une des revendications 2 à 6, dans lequel ledit paramètre représentatif de l'état du réseau comprend la quantité de données mémorisées dans une file d'attente dudit agent initiateur (1).

8. Système selon l'une des revendications 2 à 6, dans lequel ledit paramètre représentatif de l'état du réseau comprend le nombre de périodes du signal de cadencement d'horloge d'émission de messages dudit agent initiateur (1) séparant l'envoi d'un message de requête dudit agent initiateur (1) et la réception du message de réponse associé.

9. Système selon l'une des revendications 4 à 6, dans lequel ledit paramètre représentatif de l'état du réseau comprend un pseudo-débit de données, calculé par ajout, pour un message de requête émis par l'agent initiateur (1) à destination dudit agent destinataire, de la quantité de données associées audit message de requête, et par soustraction d'une quantité prédéterminée de données par période du signal de cadencement d'horloge d'émission de messages dudit agent initiateur (1).

10. Système selon l'une des revendications 2 à 9, comprenant une valeur de seuil définissant deux niveaux d'information de priorité, correspondant à des messages prioritaires et non prioritaires.

11. Système selon l'une des revendications précédentes, dans lequel ledit agent destinataire (2) est adapté, en réponse à un message prioritaire desdits moyens de génération (5) associés audit agent initiateur (1), pour transmettre un message prioritaire de même niveau de priorité à destination dudit agent initiateur (1).

12. Système selon l'une des revendications 4 à 11 dans lequel les moyens de mémorisation (7) comprennent une mémoire CAM.

13. Procédé de gestion de messages transmis dans un réseau d'interconnexions de blocs sur puce, ledit réseau comprenant des agents reliés par des liens point-à-point aptes à transmettre, par routage statique, des messages comprenant une information de priorité quantifiée sur N niveaux, et comprenant au moins un agent initiateur (1) de messages de requête à destination d'au moins un agent destinataire (2), un message de requête comprenant un en-tête et éventuellement des données de contenu, **caractérisé en ce** l'on détermine une priorité courante, on génère un message prioritaire lorsque ladite priorité courante est supérieure à la priorité du dernier message de requête précédemment transmis par ledit agent initiateur audit agent destinataire sans message de réponse reçu en retour, et on propage dans le réseau d'interconnexions, à partir d'un message prioritaire généré, le niveau de priorité dudit message prioritaire, à destination du ou desdits messages de requête, de sorte que lesdits messages de requête présents sur le chemin de routage dudit agent destinataire (2) sont traités en messages de requête ayant un niveau de priorité égal au niveau de priorité dudit message prioritaire.

14. Procédé selon la revendication 13, dans lequel :
- on substitue par la priorité courante ou on laisse inchangé le niveau de priorité initial d'un message de requête émis par ledit agent initiateur (1) à destination dudit agent destinataire en fonction de la valeur d'un paramètre représentatif de l'état du réseau ; et
- on gère des informations relatives aux messages de requête transmis, après affectation, audit agent destinataire.

## Claims

1. System for managing messages transmitted in a network of blocks on a chip, said system comprising agents linked by point-to-point links able to transmit, by static routing, messages comprising a priority information item quantized on N levels, and comprising at least one agent (1) initiating request messages to at least one recipient agent (2), a request message comprising a header and, where appropriate, content data, **characterized in that** it comprises means (4) of determining a current priority, means (5) of generating a priority message when said current priority is greater than the priority of the last request message previously transmitted by said initiating agent to said recipient agent with no response message received in return, and propagation means for propagating, in the network, based on a priority message sent by said generation means (5), the priority level of said priority message, to said request message or messages, so that said request messages present on the routing path of said recipient agent (2) are treated as request messages having a priority level equal to the priority level of said priority message.

2. System according to Claim 1, comprising, in addition:
- assignment means (3) designed to replace with the current priority, or leave unchanged, the initial priority level of a request message sent by said initiating agent (1) to said recipient agent (2), according to the value of a parameter representative of the state of the network; and
- means (6) of managing information relating to the request messages transmitted by said assignment means (3) to said recipient agent (2).

3. System according to Claim 2, in which said means of determining the current priority are designed to determine the current priority level according to the position of the value of a parameter representative of the state of the network, in relation to N-1 threshold values defining N ranges of values of said parameter, respectively associated with said N priority information levels.

4. System according to Claim 3, in which said management means (6) comprise storage means (7) and means (8) of updating parameters representative of the request messages transmitted by said assignment means (3) to a recipient agent, said parameters comprising an indicator representative of said initiating agent, an indicator representative of said recipient agent, the priority level assigned by said assignment means (3) to the last request message sent by said initiating agent or by said generation means to said recipient agent, and a counter of the number of request messages transmitted by said assignment means (3) to said recipient agent (2) and not having been the subject of a response message received by said initiating agent.

5. System according to Claim 3 or 4, in which said propagation means comprise transmission means, respectively dedicated to an output of an agent (9), designed to determine an input priority information item, respectively dedicated to an input of said agent, of value equal to the maximum level between a priority information item of a message present at said input and a link priority information item of the link from said input, and designed to propagate, over the link of the corresponding output, a priority information item of value equal to the maximum of the values of said input priority information items relating to the inputs comprising a message for which the input required said corresponding output.

6. System according to Claim 5, in which said propagation means are designed to propagate, output from a queue, a link priority information item equal to the maximum level of the priority information items of the messages present in said queue and a link priority information item of the input link of said queue.

7. System according to one of Claims 2 to 6, in which said parameter representative of the state of the network comprises the quantity of data stored in a queue of said initiating agent (1).

8. System according to one of Claims 2 to 6, in which said parameter representative of the state of the network comprises the number of periods of the clock timing signal controlling the sending of messages from said initiating agent (1) separating the sending of a request message from said initiating agent (1) and the receipt of the associated response message.

9. System according to one of Claims 4 to 6, in which said parameter representative of the state of the network comprises a pseudo-data rate, calculated by adding up, for a request message sent by the initiating agent (1) to said recipient agent, the quantity of data associated with said request message, and by subtracting a predetermined quantity of data for each period of the clock timing signal controlling the sending of messages from said initiating agent (1).

10. System according to one of Claims 2 to 9, comprising a threshold value defining two levels of priority information, corresponding to priority messages and non-priority messages.

11. System according to one of the preceding claims, in which said recipient agent (2) is designed, in response to a priority message from said generation means (5) associated with said initiating agent (1), to transmit a priority message of equal priority level to said initiating agent (1).

12. System according to one of Claims 4 to 11, in which the storage means (7) comprise a CAM memory.

13. Method of managing messages transmitted in a network of blocks on a chip, said network comprising agents linked by point-to-point links able to transmit, by static routing, messages comprising a priority information item quantized on N levels, and comprising at least one agent (1) initiating request messages to at least one recipient agent (2), a request message comprising a header and, where appropriate, content data, **characterized in that** a current priority is determined, a priority message is generated when said current priority is greater than the priority of the last request message previously transmitted by said initiating agent to said recipient agent with no response message received in return, and the priority level of said priority message is propagated in the network, based on a generated priority message, to said request message or messages, so that said request messages present on the routing path of said recipient agent (2) are treated as request messages having a priority level equal to the priority level of said priority message.

14. Method according to Claim 13, in which:
- the initial priority level of a request message sent by said initiating agent (1) to said recipient agent is replaced with the current priority or left unchanged, according to the value of a parameter representative of the state of the network; and
- information relating to the request messages transmitted, after assignment, to said recipient agent, is managed.

## Patentansprüche

1. System zur Verwaltung von Mitteilungen, die in einem Netzwerk von Verbindungen von On-Chip-Blöcken übertragen werden, wobei das System durch Punkt-zu-Punkt-Links verbundene Agenten enthält, die fähig sind, durch statisches Routing eine auf N Ebenen quantisierte Prioritätsinformation enthaltende Mitteilungen zu übertragen, und mindestens einen Initiator-Agent (1) von Anforderungsmitteilungen an die Adresse mindestens eines Empfänger-Agenten (2) enthält, wobei eine Anforderungsmitteilung eine Kopfzeile und ggf. Inhaltsdaten enthält, **dadurch gekennzeichnet, dass** es Einrichtungen zur Bestimmung (4) einer laufenden Priorität, Einrichtungen zur Erzeugung (5) einer prioritären Mitteilung, wenn die laufende Priorität höher ist als die Priorität der letzten Anforderungsmitteilung, die vorher vom Initiator-Agent an den Empfänger-Agent übertragen wurde, ohne dass eine Rückantwort-Mitteilung empfangen wurde, und Ausbreitungseinrichtungen enthält, um in dem Netzwerk von Verbindungen ausgehend von einer prioritären Mitteilung, die von den Erzeugungseinrichtungen (5) gesendet wurde, die Prioritätsebene der prioritären Mitteilung an die Adresse der Anforderungsmitteilung(en) auszubreiten, so dass die auf dem Routing-Weg des Empfänger-Agenten (2) vorhandenen Anforderungsmitteilungen als Anforderungsmitteilungen verarbeitet werden, die eine Prioritätsebene gleich der Prioritätsebene der prioritären Mitteilung haben.

2. System nach Anspruch 1, das außerdem enthält:
- Zuweisungseinrichtungen (3), die fähig sind, in Abhängigkeit vom Wert eines für den Zustand des Netzwerks repräsentativen Parameters die Ausgangs-Prioritätsebene einer vom Initiator-Agent (1) an den Empfänger-Agent (2) gesendeten Anforderungsmitteilung durch die laufende Priorität zu ersetzen oder unverändert zu lassen; und
- Verwaltungseinrichtungen (6) von Informationen bezüglich der Anforderungsmitteilungen, die von den Zuweisungseinrichtungen (3) an den Empfänger-Agent (2) übertragen werden.

3. System nach Anspruch 2, bei dem die Einrichtungen zur Bestimmung der laufenden Priorität geeignet sind, um die laufende Prioritätsebene in Abhängigkeit von der Position des Werts eines für den Zustand des Netzwerks repräsentativen Parameters bezüglich von N-1 Schwellwerten zu bestimmen, die N Werteintervalle des Parameters definieren, die je den N Prioritätsinformationsebenen zugeordnet sind.

4. System nach Anspruch 3, bei dem die Verwaltungseinrichtungen (6) Speichereinrichtungen (7) und Aktualisierungseinrichtungen (8) von Parametern enthalten, die für die Anforderungsmitteilungen repräsentativ sind, welche von den Zuweisungseinrichtungen (3) an einen Empfänger-Agent übertragen werden, wobei die Parameter einen für den Initiator-Agent repräsentativen Indikator, einen für den Empfänger-Agent repräsentativen Indikator, die durch die Zuweisungseinrichtungen (3) der letzten vom Initiator-Agent oder von den Erzeugungseinrichtungen an den Empfänger-Agent gesendeten Anforderungsmitteilung zugewiesene Prioritätsebene und einen Zähler der Anzahl von Anforderungsmitteilungen enthalten, die von den Zuweisungseinrichtungen (3) an den Empfänger-Agent (2) übertragen werden und nicht Gegenstand einer vom Initiator-Agent empfangenen Antwortmitteilung waren.

5. System nach Anspruch 3 oder 4, bei dem die Ausbreitungseinrichtungen je einem Ausgang eines Agenten (9) dedizierte Übertragungseinrichtungen enthalten, die geeignet sind, um eine Eingangs-Prioritätsinformation zu bestimmen, die je einem Eingang des Agenten dediziert ist, mit einem Wert gleich der maximalen Ebene zwischen einer Prioritätsinformation einer an dem Eingang vorhandenen Mitteilung und einer Link-Prioritätsinformation des Links des Eingangs, und geeignet sind, um auf dem Link des entsprechenden Ausgangs eine Prioritätsinformation eines Werts gleich dem Maximum der Werte der Eingangs-Prioritätsinformationen bezüglich der Eingänge auszubreiten, die eine Mitteilung enthalten, für die der Eingang den entsprechenden Ausgang angefordert hat.

6. System nach Anspruch 5, bei dem die Ausbreitungseinrichtungen geeignet sind, um am Ausgang einer Warteschlange eine Link-Prioritätsinformation gleich der maximalen Ebene der Prioritätsinformationen der in der Warteschlange vorhandenen Mitteilungen und eine Link-Prioritätsinformation des Eingangslinks der Warteschlange auszubreiten.

7. System nach einem der Ansprüche 2 bis 6, bei dem der für den Zustand des Netzwerks repräsentative Parameter die Menge von in einer Warteschlange des Initiator-Agenten (1) gespeicherten Daten enthält.

8. System nach einem der Ansprüche 2 bis 6, bei dem der für den Zustand des Netzwerks repräsentative Parameter die Anzahl von Perioden des Sendetaktsignals von Mitteilungen des Initiator-Agenten (1) enthält, die das Senden einer Anforderungsmitteilung des Initiator-Agenten (1) und den Empfang der zugehörigen Antwortmitteilung trennen.

9. System nach einem der Ansprüche 4 bis 6, bei dem der für den Zustand des Netzwerks repräsentative Parameter einen Pseudo-Datendurchsatz enthält, der durch Hinzufügen, für eine vom Initiator-Agent (1) an die Adresse des Empfänger-Agenten gesendete Anforderungsmitteilung, der Menge von der Anforderungsmitteilung zugeordneten Daten und durch Abziehen einer vorbestimmten Datenmenge pro Periode des Sendetaktsignals von Mitteilungen des Initiator-Agenten (1) berechnet wird.

10. System nach einem der Ansprüche 2 bis 9, das einen Schwellwert enthält, der zwei Prioritätsinformationsebenen definiert, die prioritären und nicht prioritären Mitteilungen entsprechen.

11. System nach einem der vorhergehenden Ansprüche, bei dem der Empfänger-Agent (2) geeignet ist, um als Antwort auf eine prioritäre Mitteilung der dem Initiator-Agent (1) zugeordneten Erzeugungseinrichtungen (5) eine prioritäre Mitteilung gleicher Prioritätsebene an die Adresse des Initiator-Agenten (1) zu übertragen.

12. System nach einem der Ansprüche 4 bis 11, bei dem die Speichereinrichtungen (7) einen CAM-Speicher enthalten.

13. Verfahren zur Verwaltung von Mitteilungen, die in einem Netzwerk von Verbindungen von On-Chip-Blöcken übertragen werden, wobei das Netzwerk durch Punkt-zu-Punkt-Links verbundene Agenten enthält, die fähig sind, durch statisches Routing eine auf N Ebenen quantisierte Prioritätsinformation enthaltende Mitteilungen zu übertragen, und mindestens einen Initiator-Agent (1) von Anforderungsmitteilungen an die Adresse mindestens eines Empfänger-Agenten (2) enthält, wobei eine Anforderungsmitteilung eine Kopfzeile und ggf. Inhaltsdaten enthält, **dadurch gekennzeichnet, dass** eine laufende Priorität bestimmt wird, eine prioritäre Mitteilung erzeugt wird, wenn die laufende Priorität höher ist als die Priorität der letzten Anforderungsmitteilung, die vorher vom Initiator-Agent an den Empfänger-Agent übertragen wurde, ohne dass eine Rückantwort-Mitteilung empfangen wurde, und im Netzwerk von Verbindungen ausgehend von einer erzeugten prioritären Mitteilung die Prioritätsebene der prioritären Mitteilung an die Adresse der Anforderungsmitteilung(en) ausgebreitet wird, so dass die auf dem Routing-Weg des Empfänger-Agenten (2) vorhandenen Anforderungsmitteilungen als Anforderungsmitteilungen verarbeitet werden, die eine Prioritätsebene gleich der Prioritätsebene der prioritären Mitteilung haben.

14. Verfahren nach Anspruch 13, bei dem:
- in Abhängigkeit vom Wert eines für den Zustand des Netzwerks repräsentativen Parameters die Ausgangs-Prioritätsebene einer vom Initiator-Agent (1) an die Adresse des Empfänger-Agenten gesendeten Anforderungsmitteilung durch die laufende Priorität ersetzt oder unverändert gelassen wird; und
- Informationen bezüglich der Anforderungsmitteilungen, die nach Zuweisung an den Empfänger-Agent übertragen werden, verwaltet werden.
